# EUROPEAN PATENT APPLICATION

(11) **EP 4 848 165 A1**
(43) Date of publication of application: **02.12.2026**
(21) Application number: 25179459.0
(22) Date of filing: 28.05.2025
(51) Int. Cl.: G06Q 10/04, G06Q 10/0631, G06Q 10/083, G06Q 30/018

(54) **A COMPUTER SYSTEM COMPRISING PROCESSING CIRCUITRY CONFIGURED TO ESTIMATE EMISSIONS ASSOCIATED WITH A PARCEL, A COMPUTER-IMPLEMENTED METHOD, AND A VEHICLE**

(71) Applicant: Volvo Truck Corporation, 405 08 Göteborg (SE)
(72) Inventor: STÅL, Jonathan, 414 77 GÖTEBORG (SE); LAINE, Leo, 414 84 GÖTEBORG (SE); LÖFVING, Joseph, 412 78 GÖTEBORG (SE); SUMAN, Saurabh, 417 47 GÖTEBORG (SE); VILCA, José, 421 71 VÄSTRA FRÖLUNDA (SE); WILHELMSSON, Martin, 423 39 TORSLANDA (SE)
(74) Representative: Kransell & Wennborg KB

(57) **Abstract**

The disclosure relates to a computer system (600) comprising processing circuitry (602) configured to estimate emissions associated with a parcel (1) being transported along a route (2) by means of a battery electric vehicle (100), wherein the processing circuitry (602) is configured to:
- obtain loading procedure data and generate an unalterable event log (BL1) comprising the loading procedure data,
- obtain charging procedure data and generate an unalterable event log (BL2) comprising the charging procedure data,
- obtain delivery procedure data and generate an unalterable event log (BL3) comprising the delivery procedure data, and
- estimate emissions associated with the parcel (1) based on the data in the unalterable event logs of the loading procedure event, the charging procedure event, and the delivery procedure event.

## Description

### TECHNICAL FIELD

The disclosure relates generally to vehicles. In particular aspects, the disclosure relates to a computer system comprising processing circuitry configured to estimate emissions associated with a parcel being transported along a route by means of a battery electric vehicle, a computer-implemented method for estimating emissions associated with a parcel being transported along a route by means of a battery electric vehicle, a computer program product, a non-transitory computer-readable storage medium, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In recent years, the automotive sector has seen a growing trend toward electrification. Although this trend has mainly been related to passenger vehicles, there is also a trend towards using battery electric commercial vehicles, including battery electric goods transporting vehicles, such as battery electric trucks. A reason for this trend is the ambition to reduce emissions, including carbon dioxide (CO₂) emissions.

There is a need to improve tracking of emissions when transporting goods by battery electric vehicles.

### SUMMARY

According to a first aspect of the disclosure, there is provided a computer system comprising processing circuitry configured to estimate emissions associated with a parcel being transported along a route by means of a battery electric vehicle, wherein
- a unique parcel identifier is assigned to the parcel,
- a unique vehicle identifier is assigned to the battery electric vehicle, and
- a charging station for charging the battery electric vehicle is provided along the route,
the processing circuitry being configured to:
- obtain loading procedure data indicative of a loading procedure event of the parcel, wherein the loading procedure data comprises the unique parcel identifier, the vehicle identifier, and geographic location data associated with the parcel during the loading procedure event,
- generate an unalterable event log of the loading procedure event comprising the loading procedure data,
- obtain charging procedure data indicative of a charging procedure event of the battery electric vehicle at the charging station along the route, wherein the charging procedure data comprises the unique parcel identifier, the vehicle identifier, geographic location data associated with the parcel during the charging procedure event, and electric energy consumption data of the battery electric vehicle,
- generate an unalterable event log of the charging procedure event comprising the charging procedure data,
- obtain delivery procedure data indicative of a delivery procedure event of the parcel, wherein the delivery procedure data comprises the unique parcel identifier, the vehicle identifier, and geographic location data associated with the parcel during the delivery procedure event,
- generate an unalterable event log of the delivery procedure event comprising the delivery procedure data, and
- estimate emissions associated with the parcel based on the data in the unalterable event logs of the loading procedure event, the charging procedure event, and the delivery procedure event.

The first aspect of the disclosure may seek to provide accurate, reliable, verifiable, and/or cost-effective tracking of emissions associated with a parcel being transported along a route by means of a battery electric vehicle. A technical benefit may include that by employing unique identifiers, unalterable event logs, and loading, delivery and charging procedure data as disclosed herein, emission estimation associated with the parcel may be more accurate, reliable and/or verifiable. A technical benefit may additionally or alternatively include that by using an event-based approach for the emission estimation as disclosed herein, less processing power may be required while still achieving an appropriately accurate and reliable estimation. This may result in a more cost-effective system for providing the emission estimation. The time for performing the estimation may also be reduced.

Optionally in some examples, including in at least one preferred example, the processing circuitry is configured to estimate the emissions based on at least one of the electric energy consumption data and a determined transport distance of the parcel estimated based on the geographic location data associated with the parcel. A technical benefit may include enabling precise calculation of energy use and emissions per parcel by factoring in both consumed energy and transport distance estimated based on the geographical location data. A technical benefit may additionally or alternatively include that the transport distance is accurately estimated based on event-based data, requiring less or no geographic location data between the events for estimating transport distance.

Optionally in some examples, including in at least one preferred example, the loading procedure data comprises a state of charge level of the battery electric vehicle at the loading procedure event, and wherein the processing circuitry is further configured to estimate the emissions based on the state of charge level of the battery electric vehicle at the loading procedure event. A technical benefit may include enhancing the accuracy of energy consumption by capturing the vehicle's energy state at the start of parcel transport.

Optionally in some examples, including in at least one preferred example, the delivery procedure data comprises a state of charge level of the battery electric vehicle at the delivery procedure event, and wherein the processing circuitry is further configured to estimate the emissions based on the state of charge level of the battery electric vehicle at the delivery procedure event. A technical benefit may include enhancing the accuracy of energy consumption by capturing the vehicle's energy state at the end of parcel transport.

Optionally in some examples, including in at least one preferred example, a unique charging station identifier is assigned to the charging station, and wherein the charging procedure data comprises the unique charging station identifier. A technical benefit may include improving the reliability of the emission estimation.

Optionally in some examples, including in at least one preferred example, the charging procedure data comprises data indicative of a power generating source used for generating the energy provided by the charging station, and wherein the processing circuitry is further configured to estimate the emissions based on the data indicative of the power generating source used for generating the energy provided by the charging station. A technical benefit may include that emissions generated by the power generating source is considered for the emission estimation of the parcel.

Optionally in some examples, including in at least one preferred example, the unalterable event logs are implemented using a blockchain-based data structure. A technical benefit may include ensuring data integrity and tamper-resistance for critical events, which enhances trust and verifiability in the emission estimation by the computer system. Additionally, or alternatively, the unalterable event logs may be implemented using at least one or a combination of the following: Hash-chained log files, Trusted Platform Module (TPM)-backed logging, WORM (Write Once, Read Many) storage, Digital signatures with secure timestamps, and Merkle tree structures.

Optionally in some examples, including in at least one preferred example, the unique parcel identifier is associated with data about at least one of weight and size of the parcel, and wherein the processing circuitry is further configured to estimate the emissions based on the data about at least one of weight and size of the parcel. A technical benefit may include enabling emissions to be more accurately apportioned based on the physical characteristics of the transported parcel.

Optionally in some examples, including in at least one preferred example, the geographic location data is obtained by collecting the geographic location data from a localization system of the battery electric vehicle. A technical benefit may include improving the accuracy of transport route tracking and distance estimation through vehicle-based localization.

Optionally in some examples, including in at least one preferred example, the processing circuitry is configured to estimate carbon related emissions associated with the parcel based on the data in the unalterable event logs of the loading procedure event, the charging procedure event, and the delivery procedure event. A technical benefit may include that by employing unique identifiers, unalterable event logs, and loading, delivery and charging procedure data as disclosed herein, carbon related emission estimation associated with the parcel may be more accurate, reliable and/or verifiable. In some examples, the carbon related emissions are CO₂ emissions.

Optionally in some examples, including in at least one preferred example, the respective unalterable event log includes a timestamp indicating a time of occurrence of the respective event. A technical benefit may include enabling time-based analytics and traceability, such as transport duration, event correlation, and historical emission reviews.

Optionally in some examples, including in at least one preferred example, the processing circuitry is further configured to estimate the emissions associated with the parcel based on a time duration of parcel transport along the route between the loading and delivery procedure events. A technical benefit may include refining emissions calculation by incorporating operational time, which may correlate with energy consumption.

Optionally in some examples, including in at least one preferred example, the processing circuitry is further configured to estimate the emissions associated with the parcel by using a model that takes into account terrain data or elevation change along the route. A technical benefit may include enhancing model precision by accounting for energy consumption variations due to changes in topography.

Optionally in some examples, including in at least one preferred example, the delivery procedure data further comprises a delivery confirmation input from a recipient device. A technical benefit may include increasing delivery verification and data credibility through the recipient device.

Optionally in some examples, including in at least one preferred example, the electric energy consumption data of the charging procedure data corresponds to energy transferred to the battery electric vehicle during the charging event. A technical benefit may include accurately quantifying input energy for improved parcel-level emissions estimation. In some examples, the electric energy consumption data is received from the charging station. A technical benefit may include increased confidence in the energy consumption data.

According to a second aspect of the disclosure, there is provided a computer-implemented method for estimating emissions associated with a parcel being transported along a route by means of a battery electric vehicle, wherein
- a unique parcel identifier is assigned to the parcel,
- a unique vehicle identifier is assigned to the battery electric vehicle, and
- a charging station for charging the battery electric vehicle is provided along the route,
the method comprising:
- obtaining loading procedure data indicative of a loading procedure event of the parcel, wherein the loading procedure data comprises the unique parcel identifier, the vehicle identifier, and geographic location data associated with the parcel during the loading procedure event,
- generating an unalterable event log of the loading procedure event comprising the loading procedure data,
- obtaining charging procedure data indicative of a charging procedure event of the battery electric vehicle at the charging station along the route, wherein the charging procedure data comprises the unique parcel identifier, the vehicle identifier, geographic location data associated with the parcel during the charging procedure event, and electric energy consumption data of the battery electric vehicle,
- generating an unalterable event log of the charging procedure event comprising the charging procedure data,
- obtaining delivery procedure data indicative of a delivery procedure event of the parcel, wherein the delivery procedure data comprises the unique parcel identifier, the vehicle identifier, and geographic location data associated with the parcel during the delivery procedure event,
- generating an unalterable event log of the delivery procedure event comprising the delivery procedure data, and
- estimating emissions associated with the parcel based on the data in the unalterable event logs of the loading procedure event, the charging procedure event, and the delivery procedure event.

The second aspect of the disclosure may seek to provide accurate, reliable, verifiable, and/or cost-effective tracking of emissions associated with a parcel being transported along a route by means of a battery electric vehicle. A technical benefit may include that by employing unique identifiers, unalterable event logs, and loading, delivery and charging procedure data as disclosed herein, emission estimation associated with the parcel may be more accurate, reliable and/or verifiable. A technical benefit may additionally or alternatively include that by using an event-based approach for the emission estimation as disclosed herein, less processing power may be required while still achieving an appropriately accurate and reliable estimation. This may result in a more cost-effective method for providing the emission estimation. The time for performing the estimation may also be reduced. Advantages and technical benefits of the second aspect of the disclosure are analogous to advantages and technical benefits of the first aspect of the disclosure, and vice versa. The examples of the first aspect of the disclosure are applicable to and combinable with the examples of the second aspect of the disclosure, and vice versa.

Optionally in some examples, including in at least one preferred example, estimating the emissions associated with the parcel comprises estimating the emissions based on at least one of the electric energy consumption data and a determined transport distance of the parcel estimated based on the geographic location data associated with the parcel. A technical benefit may include enabling precise calculation of energy use and emissions per parcel by factoring in both consumed energy and transport distance estimated based on the geographical location data. A technical benefit may additionally or alternatively include that the transport distance is accurately estimated based on event-based data, requiring less or no geographic location data between the events for estimating transport distance.

According to a third aspect of the disclosure, there is provided a computer program product comprising program code for performing, when executed by the processing circuitry, the method of any of the examples of the second aspect of the disclosure.

According to a fourth aspect of the disclosure, there is provided a non-transitory computer-readable storage medium comprising instructions, which when executed by the processing circuitry, cause the processing circuitry to perform the method of any of the examples of the second aspect of the disclosure.

According to a fifth aspect of the disclosure, there is provided a vehicle comprising the computer system according to any one of the examples of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1A** is an exemplary schematic view of a parcel which is transported by means of a battery electric vehicle according to an example.
**FIG. 1B** is an exemplary schematic view of a transport route along which a parcel is being transported by means of a battery electric vehicle according to an example.
**FIG. 2** is an exemplary flow diagram of an event-based emission estimation of a parcel which is transported along a route by means of a battery electric vehicle.
**FIG. 3** is an exemplary flow chart of a computer-implemented method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

An aim of the present disclosure is to improve estimation of emissions associated with transportation of a parcel, which is transported by means of a battery electric vehicle. For example, an aim is to provide appropriately accurate, reliable, verifiable, and/or cost-effective tracking of emissions associated with a parcel being transported along a route by means of a battery electric vehicle. The battery electric vehicle is hence powered by at least one battery, typically a high-voltage battery. The high-voltage battery preferably comprises a plurality of battery cells, such as prismatic and/or cylindrical battery cells, which are electrically connected in series and/or in parallel. The high-voltage battery may be any type of battery for providing propulsion power to one or more electric motors/generators of the battery electric vehicle, such as but not limited to a lithium-ion battery, a nickel-metal hydride battery, or a solid-state battery. The vehicle may be any type of battery electric vehicle which is propelled by one or more electric motors/generators, but is preferably a commercial vehicle, such as a truck which is adapted to transport parcels. In other examples, the battery electric vehicle may be a battery electric marine vessel.

A parcel as disclosed herein refers to a discrete unit of cargo or shipment intended for delivery, typically comprising one or more items packaged together and assigned a unique identifier for tracking. A parcel may comprise or be associated with metadata such as weight, dimensions, destination, and sender/recipient information, and is preferably handled as a single item during transport and logistics operations.

Currently, many organizations rely on rough estimates - or in some cases, unsubstantiated assumptions - to report their total emissions. Such approaches lack the precision required for developing targeted and effective strategies to reduce a company's carbon footprint. Accurate emissions tracking is essential for gaining a clear understanding of how an organization can meaningfully reduce its environmental impact. As another example, accurate emissions tracking may be used to control one or more battery electric vehicles so that the emissions associated with transportation of a parcel is reduced.

The need to estimate emissions has become increasingly urgent due to evolving regulatory requirements, particularly with respect to the monitoring and reporting of Scope 3 emissions. For example, the European Union's Corporate Sustainability Reporting Directive (CSRD) requires that companies comprehensively account for their emissions, including not only those generated internally but also those arising from external activities such as the transportation of goods by third-party entities. As regulations continue to tighten, there is a clear and growing demand for accurate, auditable emissions estimation.

In response to this demand, data tracking and data handling systems - equipped with analytical and calculative capabilities - may be further developed to enable precise and reliable emissions estimation. Such systems are anticipated to be of high relevance and value to organizations seeking to improve their sustainability reporting, compliance efforts, and/or control of its fleet of vehicles.

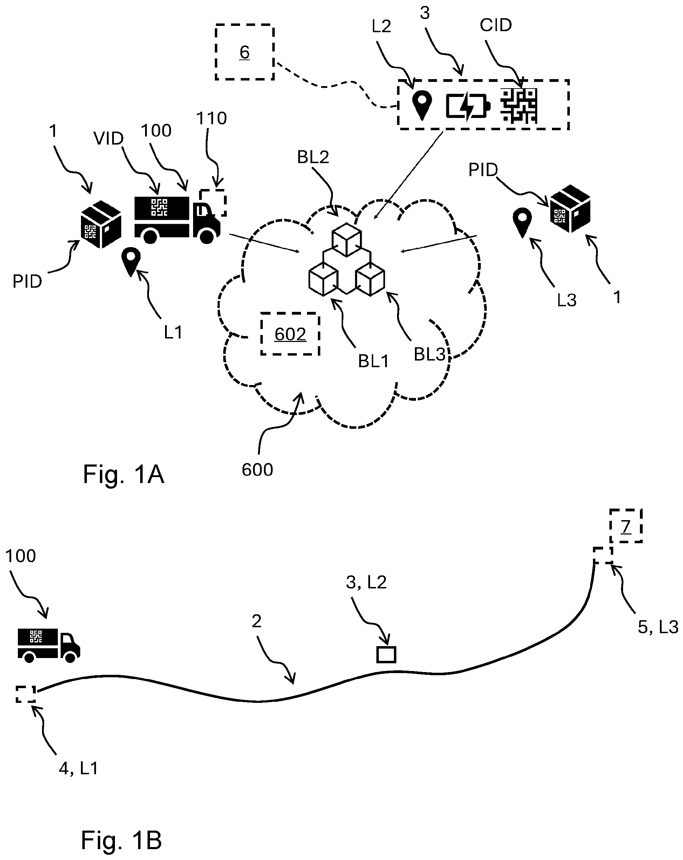

**FIG. 1A** is an exemplary schematic view of a parcel 1 which is transported by means of a battery electric vehicle 100 according to an example. **FIG. 1B** is an exemplary schematic view of a transport route 2 along which a parcel 1 is being transported by means of a battery electric vehicle 100 according to an example.

With reference to e.g. FIGS. 1A and 1B, a computer system 600 (see FIG. 1A) comprising processing circuitry 602 configured to estimate emissions associated with the parcel 1 is exemplified in schematic view. The parcel 1 is being transported along the route 2 by means of the battery electric vehicle 100 (see FIG. 1B).

The computer system 600 may as shown be provided in a cloud server, i.e. in a remote location from the battery electric vehicle 100. In other examples, the computer system may be provided on-board the battery electric vehicle 100.

A unique parcel identifier PID is assigned to the parcel 1. The unique parcel identifier PID may be any type of identifier, such as but not limited to a QR code, a barcode, a UUID (Universally Unique Identifier), an EPC (Electronic Product Code), and a Custom Tracking Number with Timestamp. These identifiers are typically stored digitally and/or physically marked on the parcel 1 via a label, tag, or an embedded RFID chip.

A unique vehicle identifier VID is assigned to the battery electric vehicle 100. The unique vehicle identifier VID may be any type of identifier, such as but not limited to a VIN (Vehicle Identification Number), Fleet Management ID, a UUID (Universally Unique Identifier), a License Plate number, RFID, IoT-Tag serial number, a QR code, and a barcode,. The aforementioned VID may be stored in, or physically provided on, the vehicle 100, and/or digitally stored in the computer system 600. In some examples, the VID may be associated with operational and emissions data of the vehicle 100, such as power consumption rate data.

As shown in FIG. 1B, a charging station 3 for charging the battery electric vehicle 100 is provided along the route 2. The charging station 3 may be any type of charging station for electrically charging the battery electric vehicle 100. Preferably, the charging station 3 is a high-power charging station with a direct current (DC) charging capacity of at least 50 kW, such as 100 kW or more. In other examples, the charging station 3 is an alternating current (AC) charging station. The charging capacity is likely lower for such a charging station, such as 10-30 kW.

The route 2 comprises a start location 4 and a delivery location 5. The parcel 1 is being loaded at the start location 4 and is being delivered and unloaded from the battery electric vehicle 100 at the delivery location 5.

The processing circuitry 602 is configured to obtain loading procedure data indicative of a loading procedure event of the parcel 1, i.e. at the start location 4, wherein the loading procedure data comprises the unique parcel identifier PID, the vehicle identifier VID, and geographic location data L1 associated with the parcel 1 during the loading procedure event.

In some examples, the unique parcel identifier PID may be automatically collected while loading the parcel 1. For example, a scanner, or any other PID reader device, may be used for this purpose. In other examples, an operator may manually collect the unique parcel identifier PID by a handheld device comprising a PID reader. The unique parcel identifier PID may then be transferred to the computer system 600, e.g. via wireless or wired transmission.

In some examples, the vehicle identifier VID may be automatically collected while loading the parcel 1. In other examples, an operator may manually collect the vehicle identifier VID by a handheld device. The vehicle identifier VID may then be transferred to the computer system 600, e.g. via wireless or wired transmission. In yet further examples, the vehicle identifier VID may already be provided in the computer system 600.

The processing circuitry 602 is further configured to generate an unalterable event log BL1 of the loading procedure event comprising the loading procedure data.

The processing circuitry 602 is further configured to obtain charging procedure data indicative of a charging procedure event of the battery electric vehicle 100 at the charging station 3 along the route 2, wherein the charging procedure data comprises the unique parcel identifier PID, the vehicle identifier VID, geographic location data L2 associated with the parcel 1 during the charging procedure event, and electric energy consumption data ED of the battery electric vehicle 100. In some examples, the charging procedure data is at least partly received from the charging station 3.

The processing circuitry 602 is further configured to generate an unalterable event log BL2 of the charging procedure event comprising the charging procedure data.

The processing circuitry 602 is further configured to obtain delivery procedure data indicative of a delivery procedure event of the parcel 1, i.e. at the delivery location 5, wherein the delivery procedure data comprises the unique parcel identifier PID, the vehicle identifier VID, and geographic location data L3 associated with the parcel 1 during the delivery procedure event. Similar to the above, the unique parcel identifier PID may be automatically collected while unloading the parcel 1. For example, a scanner, or any other PID reader device, may be used for this purpose. In other examples, an operator may manually collect the unique parcel identifier PID by a handheld device. The unique parcel identifier PID may then be transferred to the computer system 600, e.g. via wireless or wired transmission.

The processing circuitry 602 is further configured to generate an unalterable event log BL3 of the delivery procedure event comprising the delivery procedure data.

The processing circuitry 602 is further configured to estimate emissions associated with the parcel 1 based on the data in the unalterable event logs BL1, BL2, BL3 of the loading procedure event, the charging procedure event, and the delivery procedure event.

For example, by not only including the loading procedure data and the delivery procedure data for the emission estimation, but also by including the charging procedure data, more accurate estimation may be achieved. Also, by use of the unalterable event logs, more reliable and verifiable estimation may be achieved.

In some examples, the processing circuitry 602 may be configured to estimate the emissions based on at least one of the electric energy consumption data ED and a determined transport distance of the parcel 1 estimated based on the geographic location data L1-L3 associated with the parcel 1. In some examples, the transport distance of the parcel 1 may be estimated by comparing the geographic location data L1-L3 with map data, and therefrom find a route 2 that corresponds to the geographic location data L1-L3. For example, the route 2 and its distance may be determined by finding a route 2 in the map data comprising the geographic location data L1-L3.

**In** some examples, the loading procedure data may comprise a SOC level of the battery electric vehicle 100 at the loading procedure event, and the processing circuitry 602 may further be configured to estimate the emissions based on the SOC level of the battery electric vehicle 100 at the loading procedure event.

**In** some examples, the delivery procedure data may comprise a SOC level of the battery electric vehicle 100 at the delivery procedure event, and the processing circuitry 602 may further be configured to estimate the emissions based on the SOC level of the battery electric vehicle 100 at the delivery procedure event. Accordingly, by way of example, the SOC level of the battery electric vehicle 100 at the loading procedure event may be in a range of > 0 % to 100 %, and the SOC level of the battery electric vehicle 100 at the delivery procedure event may be in a range of < 100 % to 0 %.

In some examples, a unique charging station identifier CID may be assigned to the charging station 3, and the charging procedure data may comprise the unique charging station identifier CID. Similar to the above, the unique charging station identifier CID may be automatically collected while charging the battery electric vehicle 100. For example, a scanner, or any other CID reader device, may be used for this purpose. In other examples, an operator may manually collect the unique charging station identifier CID by a handheld device. The unique charging station identifier CID may then be transferred to the computer system 600, e.g. via wireless or wired transmission. The unique charging station identifier CID may be any type of unique identifier, e.g., a QR code, a barcode, or the like.

The charging procedure data may comprise data indicative of a power generating source 6 used for generating the energy provided by the charging station 3, and the processing circuitry 602 may further be configured to estimate the emissions based on the data indicative of the power generating source 6 used for generating the energy provided by the charging station 3. Accordingly, by way of example, emissions generated by the power generating source 6 may be considered for the emission estimation of the parcel 1. For example, the power generating source 6 may be any one or a combination of wind power, solar power, water power, nuclear power, coal power, natural gas power, etc. Hence, a more sustainable power generating source 6 will likely result in lower emissions while a less sustainable power generating source 6 likely will result in higher emissions.

In some examples, the unalterable event logs BL1-BL3 may be implemented using a blockchain-based data structure. In other examples, the unalterable event logs BL1-BL3 may be implemented using at least one or a combination of the following: Hash-chained log files, Trusted Platform Module (TPM)-backed logging, WORM (Write Once, Read Many) storage, Digital signatures with secure timestamps, and Merkle tree structures.

The unique parcel identifier PID may be associated with data about at least one of weight and size of the parcel 1, and the processing circuitry 602 may further be configured to estimate the emissions based on the data about at least one of weight and size of the parcel 1. Thereby, the emissions may be more accurately apportioned based on the physical characteristics of the transported parcel 1. For example, based on the data about at least one of weight and size of the parcel 1, the processing circuitry 602 may be configured to estimate the emissions by determining a share of the total emissions by the battery electric vehicle 100 which is associated with the parcel 1. This share may be in the range of > 0 % to 100 % of the total emissions by the battery electric vehicle 100 for driving along the route 2.

The geographic location data L1-L3 may be obtained by collecting the geographic location data from a localization system 110 of the battery electric vehicle 100. The localization system 110 may be a Global Navigation Satellite System (GNSS), such as a Global Positioning System (GPS). Additionally, or alternatively, the localization system 110 may comprise one or more surrounding perception sensors provided on the battery electric vehicle 100, such as camera(s), LIDAR(s), RADAR(s), etc., which are configured to scan the surrounding environment and determine a position by comparing the scan with map data.

Preferably, the processing circuitry 602 may be configured to estimate carbon related emissions associated with the parcel 1 based on the data in the unalterable event logs BL1-BL3 of the loading procedure event, the charging procedure event, and the delivery procedure event. Thereby, a carbon footprint associated with the parcel 1 may be determined. Additionally, or alternatively, the processing circuitry 602 may be configured to estimate any other emissions, such as NOx, SOx, particles, etc.

The respective unalterable event log BL1-BL3 may include a timestamp indicating a time of occurrence of the respective event. Thereby, time-based analytics and traceability may be enabled. For example, a transport duration may be determined therefrom by the processing circuitry 602, and/or event correlation may be determined by the processing circuitry 602. The event correlation may include to determine an order of the events, thereby increasing a confidence level that the events occurred in the expected order. The transport duration may be used by the processing circuitry 602 for the emission estimation. Accordingly, the processing circuitry 602 may further be configured to estimate the emissions associated with the parcel 1 based on a time duration of parcel transport along the route 2 between the loading and delivery procedure events. For example, the transport duration may be used in combination with an electric energy consumption rate (i.e. power consumption rate) of the battery electric vehicle 100. The electric energy consumption rate may be determined based on the data in the unalterable event logs BL1-BL3, such as based on the SOC level at the loading procedure event and/or at the delivery procedure event, and/or based on the electric energy transferred to the battery electric vehicle 100 by the charging station 3. In other examples, the electric energy consumption rate may be predetermined for the battery electric vehicle 100. In yet further examples, the electric energy consumption rate may be determined based on terrain data or elevation change along the route 2. Such data may be obtained from map data.

Additionally, or alternatively, by use of the SOC level at the loading procedure event, the SOC level at the delivery procedure event, and the electric energy transferred to the battery electric vehicle 100 by the charging station 3, a total energy consumption of the battery electric vehicle 100 for driving along the route from the start location 4 to the delivery location 5 may be determined by the processing circuitry 602.

The processing circuitry 602 may additionally or alternatively be configured to estimate the emissions associated with the parcel 1 by using a model that takes into account terrain data or elevation change along the route 2. Such a model may for example account for increased energy consumption in uphill segments along the route 2 and decreased energy consumption in downhill segments along the route 2. In the downhill segments, regenerative braking may be used by the battery electric vehicle 100, and this may be considered in the model. An example of such a model may be expressed as follows: $Etotal = Ebase + k \times Δh$

Etotal is total estimated energy consumption, Ebase is energy consumption based on flat distance (which may be predetermined) from the start location 4 to the delivery location 5, Δh is elevation change (e.g. in meters) from the start location 4 to the delivery location 5, and k is energy cost per meter of elevation change (which may be vehicle-specific).

As another example, terrain data or elevation change along the route 2 may be used to compare the terrain data or elevation change along the route 2 with historical data comprising elevation profile data of previous routes travelled by the battery electric vehicle 100, or by another similar vehicle. The previous routes may be associated with estimated energy consumption for travelling the previous route, and this data may be used to determine energy consumption of the battery electric vehicle for the route 2.

The delivery procedure data may further comprise a delivery confirmation input from a recipient device 7. The recipient device 7 may be a computer and a PID reader which collects the unique parcel identifier PID at the delivery location 5.

In some examples, the processing circuitry 602 may be configured to consider a fill rate of the battery electric vehicle 100 when estimating emissions associated with the parcel 1. For example, if the battery electric vehicle 100 is not fully loaded, a larger portion of the energy consumption by the battery electric vehicle 100 may be apportioned to the parcel 1 in contrast to if the battery electric vehicle 100 is fully loaded. The processing circuitry may be configured to obtain a value of the fill rate of the battery electric vehicle 100 from the vehicle itself and/or from another entity, such as from a fleet management center.

In some examples, the processing circuitry 602 may further be configured to control the battery electric vehicle 100 based on the estimated emissions associated with the parcel 1. For instance, the emission estimation may be used to influence route selection or operational parameters of the vehicle 100 to reduce overall environmental impact.

For example, the processing circuitry 602 may further be configured to determine a control strategy for the battery electric vehicle 100 based on the estimated emissions, and control at least one operational parameter of the battery electric vehicle 100 based on the control strategy, wherein the operational parameter comprises at least one of a transport route and a speed profile. A technical benefit may include that emissions can be proactively reduced by adjusting the vehicle's behavior in real-time or pre-trip planning.

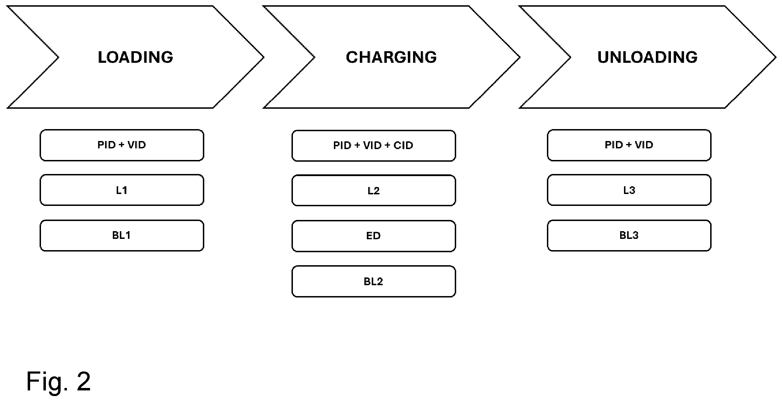

**FIG. 2** is an exemplary flow diagram of an event-based emission estimation of a parcel 1 which is transported along a route by means of a battery electric vehicle 100. The events comprise the loading procedure event, i.e. LOADING, the charging procedure event, i.e. CHARGING, and the delivery procedure event, i.e. UNLOADING. Loading procedure data relating to the loading procedure event is obtained. The loading procedure data comprises the unique parcel identifier PID, the vehicle identifier VID, and the geographic location data L1 associated with the parcel 1 during the loading procedure event. Further, an unalterable event log BL1 of the loading procedure event is generated which comprises the loading procedure data. Charging procedure data relating to the charging procedure event is also obtained. The charging procedure data comprises the unique parcel identifier PID, the vehicle identifier VID, the geographic location data L2 associated with the parcel 1 during the charging procedure event, and electric energy consumption data ED of the battery electric vehicle 100. Further, an unalterable event log BL2 of the charging procedure event is generated which comprises the charging procedure data. Delivery procedure data relating to the delivery procedure event is also obtained. The delivery procedure data comprises the unique parcel identifier PID, the vehicle identifier VID, and the geographic location data L3 associated with the parcel 1 during the delivery procedure event. Further, an unalterable event log BL3 of the delivery procedure event is generated which comprises the delivery procedure data. Emissions associated with the parcel 1 are estimated based on the data in the unalterable event logs BL1-BL3 of the loading procedure event, the charging procedure event, and the delivery procedure event.

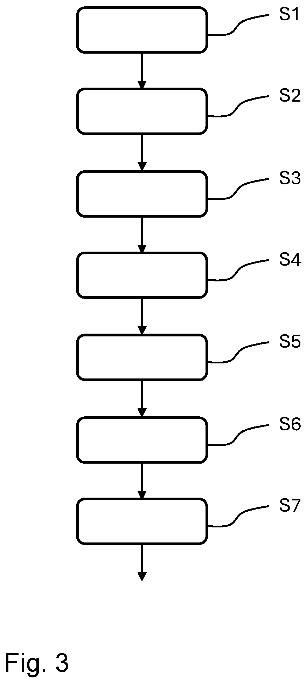

**FIG. 3** is an exemplary flow chart of a computer-implemented method according to an example. The method is used for estimating emissions associated with a parcel 1 being transported along a route 2 by means of a battery electric vehicle 100. A unique parcel identifier PID is assigned to the parcel 1, a unique vehicle identifier VID is assigned to the battery electric vehicle 100, and a charging station 3 for charging the battery electric vehicle 100 is provided along the route 2. The method comprises:
S1: obtaining loading procedure data indicative of a loading procedure event of the parcel 1, wherein the loading procedure data comprises the unique parcel identifier PID, the vehicle identifier VID, and geographic location data L1 associated with the parcel 1 during the loading procedure event,
S2: generating an unalterable event log BL1 of the loading procedure event comprising the loading procedure data,
S3: obtaining charging procedure data indicative of a charging procedure event of the battery electric vehicle 100 at the charging station 3 along the route 2, wherein the charging procedure data comprises the unique parcel identifier PID, the vehicle identifier VID, geographic location data L2 associated with the parcel 1 during the charging procedure event, and electric energy consumption data ED of the battery electric vehicle 100,
S4: generating an unalterable event log BL2 of the charging procedure event comprising the charging procedure data,
S5: obtaining delivery procedure data indicative of a delivery procedure event of the parcel 1, wherein the delivery procedure data comprises the unique parcel identifier PID, the vehicle identifier VID, and geographic location data L3 associated with the parcel 1 during the delivery procedure event,
S6: generating an unalterable event log BL3 of the delivery procedure event comprising the delivery procedure data, and
S7: estimating emissions associated with the parcel 1 based on the data in the unalterable event logs of the loading procedure event, the charging procedure event, and the delivery procedure event.

Estimating the emissions associated with the parcel 1 may comprise estimating the emissions based on at least one of the electric energy consumption data ED and a determined transport distance of the parcel 1 estimated based on the geographic location data L1-L3 associated with the parcel 1.

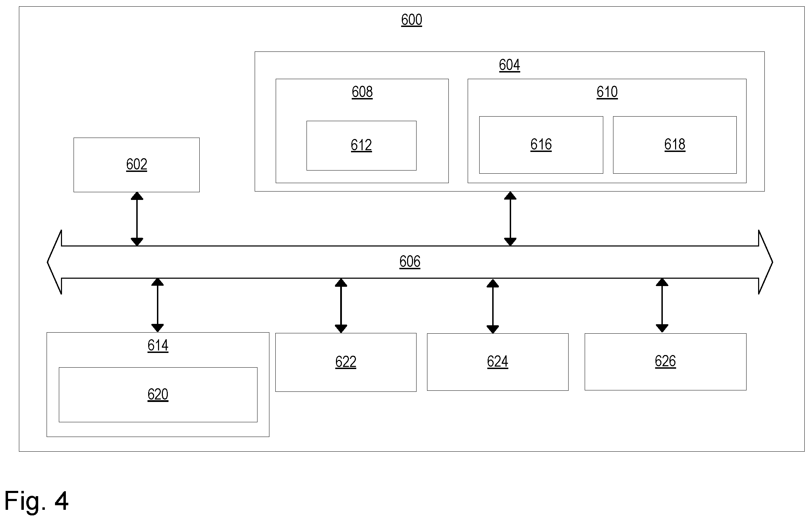

**FIG. 4** is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, features and possible feature combinations of the present disclosure are presented as a list of Examples:
Example 1. A computer system (600) comprising processing circuitry (602) configured to estimate emissions associated with a parcel (1) being transported along a route (2) by means of a battery electric vehicle (100), wherein
   - a unique parcel identifier (PID) is assigned to the parcel (1),
   - a unique vehicle identifier (VID) is assigned to the battery electric vehicle (100), and
   - a charging station (3) for charging the battery electric vehicle (100) is provided along the route (2),
   the processing circuitry (602) being configured to:
   - obtain loading procedure data indicative of a loading procedure event of the parcel (1), wherein the loading procedure data comprises the unique parcel identifier (PID), the vehicle identifier (VID), and geographic location data (L1) associated with the parcel (1) during the loading procedure event,
   - generate an unalterable event log (BL1) of the loading procedure event comprising the loading procedure data,
   - obtain charging procedure data indicative of a charging procedure event of the battery electric vehicle (100) at the charging station (3) along the route (2), wherein the charging procedure data comprises the unique parcel identifier (PID), the vehicle identifier (VID), geographic location data (L2) associated with the parcel (1) during the charging procedure event, and electric energy consumption data (ED) of the battery electric vehicle (100),
   - generate an unalterable event log (BL2) of the charging procedure event comprising the charging procedure data,
   - obtain delivery procedure data indicative of a delivery procedure event of the parcel (1), wherein the delivery procedure data comprises the unique parcel identifier (PID), the vehicle identifier (VID), and geographic location data (L3) associated with the parcel (1) during the delivery procedure event,
   - generate an unalterable event log (BL3) of the delivery procedure event comprising the delivery procedure data, and
   - estimate emissions associated with the parcel (1) based on the data in the unalterable event logs of the loading procedure event, the charging procedure event, and the delivery procedure event.
Example 2. The computer system (600) according to Example 1, wherein the processing circuitry (602) is configured to estimate the emissions based on at least one of the electric energy consumption data (ED) and a determined transport distance of the parcel (1) estimated based on the geographic location data (L1-L3) associated with the parcel (1).
Example 3. The computer system (600) according to any one of the preceding Examples, wherein the loading procedure data comprises a state of charge (SOC) level of the battery electric vehicle (100) at the loading procedure event, and wherein the processing circuitry (602) is further configured to estimate the emissions based on the state of charge (SOC) level of the battery electric vehicle (100) at the loading procedure event.
Example 4. The computer system (600) according to any one of the preceding Examples, wherein the delivery procedure data comprises a state of charge (SOC) level of the battery electric vehicle (100) at the delivery procedure event, and wherein the processing circuitry (602) is further configured to estimate the emissions based on the state of charge (SOC) level of the battery electric vehicle (100) at the delivery procedure event.
Example 5. The computer system (600) according to any one of the preceding Examples, wherein a unique charging station identifier (CID) is assigned to the charging station (3), and wherein the charging procedure data comprises the unique charging station identifier (CID).
Example 6. The computer system (600) according to any one of the preceding Examples, wherein the charging procedure data comprises data indicative of a power generating source (6) used for generating the energy provided by the charging station (3), and wherein the processing circuitry (602) is further configured to estimate the emissions based on the data indicative of the power generating source (6) used for generating the energy provided by the charging station (3).
Example 7. The computer system (600) according to any one of the preceding Examples, wherein the unalterable event logs (BL1-BL3) are implemented using a blockchain-based data structure.
Example 8. The computer system (600) according to any one of the preceding Examples, wherein the unique parcel identifier (PID) is associated with data about at least one of weight and size of the parcel (1), and wherein the processing circuitry (602) is further configured to estimate the emissions based on the data about at least one of weight and size of the parcel (1).
Example 9. The computer system (600) according to any one of the preceding Examples, wherein the geographic location data (L1-L3) is obtained by collecting the geographic location data from a localization system (110) of the battery electric vehicle (100).
Example 10. The computer system (600) according to any one of the preceding Examples, wherein the processing circuitry (602) is configured to estimate carbon related emissions associated with the parcel (1) based on the data in the unalterable event logs (BL1-BL3) of the loading procedure event, the charging procedure event, and the delivery procedure event.
Example 11. The computer system (600) according to any one of the preceding Examples, wherein the respective unalterable event log (BL1-BL3) includes a timestamp indicating a time of occurrence of the respective event.
Example 12. The computer system (600) according to Example 11, wherein the processing circuitry (602) is further configured to estimate the emissions associated with the parcel (1) based on a time duration of parcel transport along the route (2) between the loading and delivery procedure events.
Example 13. The computer system (600) according to any one of the preceding Examples, wherein the processing circuitry (602) is further configured to estimate the emissions associated with the parcel (1) by using a model that takes into account terrain data or elevation change along the route (2).
Example 14. The computer system (600) according to any one of the preceding Examples, wherein the delivery procedure data further comprises a delivery confirmation input from a recipient device (7).
Example 15. The computer system (600) according to any one of the preceding Examples, wherein the electric energy consumption data (ED) of the charging procedure data corresponds to energy transferred to the battery electric vehicle (100) during the charging event.
Example 16. A computer-implemented method for estimating emissions associated with a parcel (1) being transported along a route (2) by means of a battery electric vehicle (100) , wherein
   - a unique parcel identifier (PID) is assigned to the parcel (1),
   - a unique vehicle identifier (VID) is assigned to the battery electric vehicle (100), and
   - a charging station (3) for charging the battery electric vehicle (100) is provided along the route (2),
   the method comprising:
   - obtaining (S1) loading procedure data indicative of a loading procedure event of the parcel (1), wherein the loading procedure data comprises the unique parcel identifier (PID), the vehicle identifier (VID), and geographic location data (L1) associated with the parcel (1) during the loading procedure event,
   - generating (S2) an unalterable event log (BL1) of the loading procedure event comprising the loading procedure data,
   - obtaining (S3) charging procedure data indicative of a charging procedure event of the battery electric vehicle (100) at the charging station (3) along the route (2), wherein the charging procedure data comprises the unique parcel identifier (PID), the vehicle identifier (VID), geographic location data (L2) associated with the parcel (1) during the charging procedure event, and electric energy consumption data (ED) of the battery electric vehicle (100),
   - generating (S4) an unalterable event log (BL2) of the charging procedure event comprising the charging procedure data,
   - obtaining (S5) delivery procedure data indicative of a delivery procedure event of the parcel (1), wherein the delivery procedure data comprises the unique parcel identifier (PID), the vehicle identifier (VID), and geographic location data (L3) associated with the parcel (1) during the delivery procedure event,
   - generating (S6) an unalterable event log (BL3) of the delivery procedure event comprising the delivery procedure data, and
   - estimating (S7) emissions associated with the parcel (1) based on the data in the unalterable event logs of the loading procedure event, the charging procedure event, and the delivery procedure event.
Example 17. The method according to Example 16, wherein estimating the emissions associated with the parcel (1) comprises estimating the emissions based on at least one of the electric energy consumption data (ED) and a determined transport distance of the parcel (1) estimated based on the geographic location data (L1-L3) associated with the parcel (1).
Example 18. A computer program product comprising program code for performing, when executed by the processing circuitry, the method of any of Examples 16-17.
Example 19. A non-transitory computer-readable storage medium comprising instructions, which when executed by the processing circuitry, cause the processing circuitry to perform the method of any of Examples 16-17.
Example 20. A vehicle (100) comprising the computer system (600) according to any one of Examples 1-15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to estimate emissions associated with a parcel (1) being transported along a route (2) by means of a battery electric vehicle (100), wherein
- a unique parcel identifier (PID) is assigned to the parcel (1),
- a unique vehicle identifier (VID) is assigned to the battery electric vehicle (100), and
- a charging station (3) for charging the battery electric vehicle (100) is provided along the route (2),
the processing circuitry (602) being configured to:
- obtain loading procedure data indicative of a loading procedure event of the parcel (1), wherein the loading procedure data comprises the unique parcel identifier (PID), the vehicle identifier (VID), and geographic location data (L1) associated with the parcel (1) during the loading procedure event,
- generate an unalterable event log (BL1) of the loading procedure event comprising the loading procedure data,
- obtain charging procedure data indicative of a charging procedure event of the battery electric vehicle (100) at the charging station (3) along the route (2), wherein the charging procedure data comprises the unique parcel identifier (PID), the vehicle identifier (VID), geographic location data (L2) associated with the parcel (1) during the charging procedure event, and electric energy consumption data (ED) of the battery electric vehicle (100),
- generate an unalterable event log (BL2) of the charging procedure event comprising the charging procedure data,
- obtain delivery procedure data indicative of a delivery procedure event of the parcel (1), wherein the delivery procedure data comprises the unique parcel identifier (PID), the vehicle identifier (VID), and geographic location data (L3) associated with the parcel (1) during the delivery procedure event,
- generate an unalterable event log (BL3) of the delivery procedure event comprising the delivery procedure data, and
- estimate emissions associated with the parcel (1) based on the data in the unalterable event logs of the loading procedure event, the charging procedure event, and the delivery procedure event.

2. The computer system (600) according to claim 1, wherein the processing circuitry (602) is configured to estimate the emissions based on at least one of the electric energy consumption data (ED) and a determined transport distance of the parcel (1) estimated based on the geographic location data (L1-L3) associated with the parcel (1).

3. The computer system (600) according to any one of the preceding claims, wherein the loading procedure data comprises a state of charge (SOC) level of the battery electric vehicle (100) at the loading procedure event, and wherein the processing circuitry (602) is further configured to estimate the emissions based on the state of charge (SOC) level of the battery electric vehicle (100) at the loading procedure event.

4. The computer system (600) according to any one of the preceding claims, wherein the delivery procedure data comprises a state of charge (SOC) level of the battery electric vehicle (100) at the delivery procedure event, and wherein the processing circuitry (602) is further configured to estimate the emissions based on the state of charge (SOC) level of the battery electric vehicle (100) at the delivery procedure event.

5. The computer system (600) according to any one of the preceding claims, wherein a unique charging station identifier (CID) is assigned to the charging station (3), and wherein the charging procedure data comprises the unique charging station identifier (CID).

6. The computer system (600) according to any one of the preceding claims, wherein the charging procedure data comprises data indicative of a power generating source (6) used for generating the energy provided by the charging station (3), and wherein the processing circuitry (602) is further configured to estimate the emissions based on the data indicative of the power generating source (6) used for generating the energy provided by the charging station (3).

7. The computer system (600) according to any one of the preceding claims, wherein the unalterable event logs (BL1-BL3) are implemented using a blockchain-based data structure.

8. The computer system (600) according to any one of the preceding claims, wherein the unique parcel identifier (PID) is associated with data about at least one of weight and size of the parcel (1), and wherein the processing circuitry (602) is further configured to estimate the emissions based on the data about at least one of weight and size of the parcel (1).

9. The computer system (600) according to any one of the preceding claims, wherein the geographic location data (L1-L3) is obtained by collecting the geographic location data from a localization system (110) of the battery electric vehicle (100).

10. The computer system (600) according to any one of the preceding claims, wherein the processing circuitry (602) is configured to estimate carbon related emissions associated with the parcel (1) based on the data in the unalterable event logs (BL1-BL3) of the loading procedure event, the charging procedure event, and the delivery procedure event.

11. The computer system (600) according to any one of the preceding claims, wherein the respective unalterable event log (BL1-BL3) includes a timestamp indicating a time of occurrence of the respective event.

12. A computer-implemented method for estimating emissions associated with a parcel (1) being transported along a route (2) by means of a battery electric vehicle (100) , wherein
- a unique parcel identifier (PID) is assigned to the parcel (1),
- a unique vehicle identifier (VID) is assigned to the battery electric vehicle (100), and
- a charging station (3) for charging the battery electric vehicle (100) is provided along the route (2),
the method comprising:
- obtaining (S1) loading procedure data indicative of a loading procedure event of the parcel (1), wherein the loading procedure data comprises the unique parcel identifier (PID), the vehicle identifier (VID), and geographic location data (L1) associated with the parcel (1) during the loading procedure event,
- generating (S2) an unalterable event log (BL1) of the loading procedure event comprising the loading procedure data,
- obtaining (S3) charging procedure data indicative of a charging procedure event of the battery electric vehicle (100) at the charging station (3) along the route (2), wherein the charging procedure data comprises the unique parcel identifier (PID), the vehicle identifier (VID), geographic location data (L2) associated with the parcel (1) during the charging procedure event, and electric energy consumption data (ED) of the battery electric vehicle (100),
- generating (S4) an unalterable event log (BL2) of the charging procedure event comprising the charging procedure data,
- obtaining (S5) delivery procedure data indicative of a delivery procedure event of the parcel (1), wherein the delivery procedure data comprises the unique parcel identifier (PID), the vehicle identifier (VID), and geographic location data (L3) associated with the parcel (1) during the delivery procedure event,
- generating (S6) an unalterable event log (BL3) of the delivery procedure event comprising the delivery procedure data, and
- estimating (S7) emissions associated with the parcel (1) based on the data in the unalterable event logs of the loading procedure event, the charging procedure event, and the delivery procedure event.

13. A computer program product comprising program code for performing, when executed by the processing circuitry, the method of claim 12.

14. A non-transitory computer-readable storage medium comprising instructions, which when executed by the processing circuitry, cause the processing circuitry to perform the method of claim 12.

15. A vehicle (100) comprising the computer system (600) according to any one of claims 1-11.
